# EUROPEAN PATENT SPECIFICATION

(11) **EP 3 305 637 B1**
(45) Date of publication and mention of the grant of the patent: **13.11.2019**
(21) Application number: 17192462.4
(22) Date of filing: 21.09.2017
(51) Int. Cl.: B62J 6/04, B62J 6/18, B62J 15/00

(54) **STRADDLED VEHICLE**
GRÄTSCHSITZFAHRZEUG
VÉHICULE À ENFOURCHER

(30) Priority: 04.10.2016 JP 2016196553
(43) Date of publication of application: 11.04.2018
(73) Proprietor: Yamaha Hatsudoki Kabushiki Kaisha, Iwata-shi, Shizuoka-ken 438-8501 (JP)
(72) Inventor: SHIMIZU, Ryuta, Shizuoka-ken, 438-8501 (JP)
(74) Representative: Zimmermann, Tankred Klaus

(56) References cited:
- EP-A1- 2 557 025
- JP-A- H11 171 079
- JP-A- S60 143 149
- JP-A- 2014 046 763

## Description

The present invention relates to a straddled vehicle.

EP2557025A1 discloses a motorcycle, which is an example of a straddled vehicle. This motorcycle includes a rear end under cover, which is disposed above a rear wheel. The rear end under cover is a part corresponding to a mud guard that catches pebbles and other flying objects. The rear end under cover includes a cover base portion and a tail fender.

In FIG. 5 and FIG. 7 of EP2557025A1, it is shown that a lamp pedestal, on which a license lamp is mounted, is a separate member from the mud guard (rear end under cover) and a tail lamp and is mounted on the mud guard. The mud guard is mounted on a frame. The tail lamp is fixed by bolts and nuts to two fastening walls of the mud guard. The lamp pedestal and the tail lamp are thus mounted on the frame via the mud guard.

Also, in FIG. 5 of EP2557025A1, it is shown that a wiring of the license lamp extends upward at a space between the lamp pedestal and the mud guard. In FIG. 9 of EP2557025A1, it is shown that the wiring of the license lamp passes upward an insertion hole, penetrating in an up-down direction through the mud guard.

With EP2557025A1, the weights of the lamp pedestal, tail lamp, and headlamp and loads (vibration, etc.) due to these weights are applied to the mud guard (rear end under cover). The mud guard must thus be made high in strength. However, this causes the mud guard to increase in weight.

In addition, with EP2557025A1, the lamp pedestal and the headlamp are mounted individually on the mud guard and the arrangement is thus poor in ease of assembly. Further, the wiring of the license lamp must pass through the insertion hole of the mud guard and it is thus difficult to lay out the wiring.

The patent application JP S60 143149 A shows: a straddled vehicle comprising: a frame; a rear wheel disposed below the frame in a vehicle side view; a mud guard including a portion disposed between the frame and the rear wheel in the vehicle side view ; a tail lamp disposed above the mud guard; a license plate disposed behind the mud guard; and wherein the tail lamp includes a light source emitting light rearward, a lamp base being a separate member from the mud guard and holding and housing the light source, and a clear cover being a separate member from the lamp base, being disposed behind the light source and transmitting the light of the light source, wherein the lamp base includes a housing portion being open rearward and holding and housing the light source, an upper fastening portion fastened to the frame without interposition of the mud guard, and a lower fastening portion disposed behind the mud guard and fastened to the mud guard.

It is an object of the present invention to provide a straddled vehicle, with which a strength required of a mud guard can be reduced, with which ease of assembly can be improved, and with which laying out of wiring of a license lamp is easy.

The present object is achieved by a straddled vehicle according to Claim 1.

Preferred embodiments are laid down in the dependent claims.

The inventor thus considered to reduce the loads applied to the mud guard utilizing the tail lamp.

There is a case where the tail lamp is mounted on the frame without interposition of the mud guard. In this case, the loads applied to the mud guard can be reduced by mounting the lamp pedestal on the tail lamp. However, even in this case, the lamp pedestal must still be mounted on the tail lamp. There is thus room for improvement in regard to ease of assembly.

A preferred embodiment provides a straddled vehicle including a frame, a rear wheel, disposed below the frame in a vehicle side view, a mud guard, including a portion disposed between the frame and the rear wheel in the vehicle side view and a portion disposed behind the rear wheel, a tail lamp, disposed above the mud guard, a license lamp, illuminating a license plate disposed behind the mud guard, and a first wiring, supplying power to the license lamp, and where the tail lamp includes a light source, emitting light rearward, a lamp base, being a separate member from the mud guard and holding and housing the light source, and a clear cover, being a separate member from the lamp base, being disposed behind the light source, and transmitting the light of the light source, the lamp base includes a housing portion, being open rearward and holding and housing the light source, a lamp pedestal portion, being integral to the housing portion and on which the license lamp is mounted, an upper fastening portion, fastened to the frame without interposition of the mud guard, and a lower fastening portion, disposed behind the mud guard and fastened to the mud guard, and the first wiring extends to a position higher than the mud guard while passing between the mud guard and the lamp pedestal portion without penetrating through the mud guard.

With the present arrangement, the lamp pedestal portion, on which the license lamp is mounted, is integral, not to the mud guard, but to the housing portion of the tail lamp. The upper fastening portion of the tail lamp is mounted on the frame without interposition of the mud guard. The weights of the lamp pedestal portion and the license lamp and loads due to these weights are thus transmitted to the frame via the tail lamp. The strength required of the mud guard can thus be decreased and the weight of the mud guard can be reduced.

Further, the lamp pedestal portion is integral to the housing portion of the tail lamp and therefore the lamp pedestal portion and the housing portion do not have to be mounted individually on the frame. Ease of assembly of the straddled vehicle can thereby be improved. In addition, the first wiring, supplying power to the license lamp, extends to the position higher than the mud guard while passing between the mud guard and the lamp pedestal portion without penetrating through the mud guard. Laying out of the first wiring is thus easy in comparison to a case where the first wiring penetrates through the mud guard.

In the present preferred embodiment, at least one of the following features may be added to the above straddled vehicle.

The lamp base further includes a plate pedestal portion, being integral to the housing portion and on which the license plate is mounted.

With the present arrangement, not only the lamp pedestal portion but the plate pedestal portion, on which the license plate is mounted, is also integral to the housing portion of the tail lamp. Loads applied to the mud guard from the license plate and the plate pedestal portion can thus be reduced. The weight of the mud guard can thus be reduced further.

The straddled vehicle further includes a seat, on which a rider sits, the frame includes a pair of right and left lower frames, disposed below the seat, and a rear cross member, extending, above the rear wheel, from one of the pair of lower frames to the other of the pair of lower frames, and the first wiring passes through a space behind the rear cross member.

The straddled vehicle further includes a second wiring, supplying power to the tail lamp, and the first wiring and the second wiring pass through a space behind the rear cross member.

The straddled vehicle further includes a seat, on which a rider sits, the frame includes a pair of right and left lower frames, disposed below the seat, and a rear cross member, extending, above the rear wheel, from one of the pair of lower frames to the other of the pair of lower frames, the mud guard further includes an intermediate fastening portion, fastened to the frame, and the intermediate fastening portion of the mud guard and the upper fastening portion of the lamp base are fastened to the rear cross member.

With the present arrangement, the intermediate fastening portion of the mud guard and the upper fastening portion of the lamp base are fastened to the same member, that is, the rear cross member of the frame. Therefore, in comparison to a case where the intermediate fastening portion of the mud guard and the upper fastening portion of the lamp base are fastened to separate members, the number of parts of the frame can be reduced. The ease of assembly of the straddled vehicle can thereby be improved further.

The lamp base further includes a lower holder portion, holding the first wiring between the mud guard and the lamp base.

The lamp base further includes an upper holder portion, holding the first wiring at a position higher than the light source of the tail lamp.

With the present arrangement, the upper holder portion, which holds the first wiring, is provided at the tail lamp. The upper holder portion holds the first wiring at the position higher than the light source of the tail lamp. The first wiring can thus be guided to a high position and a portion of the first wiring can be disposed at a position higher than the mud guard.

The straddled vehicle further includes a second wiring, supplying power to the tail lamp, and the upper holder portion holds the second wiring in addition to the first wiring.

With the present arrangement, the upper holder portion of the tail lamp holds not only the first wiring that supplies power to the license lamp but also the second wiring that supplies power to the tail lamp. The number of holder portions can thus be reduced while securely holding the first wiring and the second wiring. Further, the tail lamp can be made lightweight because the number of holder portions can be reduced.

The upper holder portion extends upward from the upper fastening portion of the lamp base and the upper fastening portion includes an upper surface that supports the first wiring.

With the present arrangement, the first wiring is held not only by the upper holder portion of the lamp base but is also supported by the upper surface of the upper fastening portion of the lamp base. A movement amount of the first wiring with respect to the lamp base can thereby be reduced further. The upper fastening portion is fastened to the frame and is therefore less likely to move with respect to the frame in comparison to other portions of the lamp base. The upper holder portion extends upward from such a stable upper fastening portion. The movement of the first wiring with respect to the frame can thus be restricted reliably.

The upper fastening portion of the lamp base includes a penetrating hole, in which is inserted a bolt that fastens the lamp base to the frame, the lower fastening portion of the lamp base includes a penetrating hole, in which is inserted a bolt that fastens the lamp base to the mud guard, and the penetrating hole of the upper fastening portion and the penetrating hole of the lower fastening portion penetrate through the lamp base in mutually different directions.

With the present arrangement, two bolts are inserted respectively in the penetrating hole of the upper fastening portion and the penetrating hole of the lower fastening portion. The upper fastening portion and the lower fastening portion are thereby fastened to the frame. Further, the penetrating hole of the upper fastening portion and the penetrating hole of the lower fastening portion penetrate through the lamp base in mutually different directions. The lamp base is thereby fastened in a plurality of directions and a fastening strength of the lamp base with respect to the frame can thus be increased.

The lamp base further includes a plate pedestal portion, on which the license plate is mounted, and the plate pedestal portion is disposed behind the lower fastening portion so as to overlap with the lower fastening portion in a vehicle rear view.

With the present arrangement, the lower fastening portion of the lamp base that is fastened to the mud guard overlaps, in the vehicle rear view, with the plate pedestal portion, on which the license plate is mounted. The plate pedestal portion is disposed behind the lower fastening portion. The lower fastening portion is thus hidden by the plate pedestal portion in the vehicle rear view. The bolt that fastens the lower fastening portion to the mud guard is thus hidden by the plate pedestal portion in the vehicle rear view. The bolt and the lower fastening portion can thereby be protected by the plate pedestal portion.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a left side view of a scooter according to a preferred embodiment.
FIG. 2 is a plan view of the scooter.
FIG. 3 is an exploded perspective view showing a frame, a mud guard, a tail lamp, and a license lamp.
FIG. 4 is a left side view showing the frame, the mud guard, the tail lamp, and the license lamp.
FIG. 5 is a plan view showing the frame, the mud guard, the tail lamp, and the license lamp.
FIG. 6 is a perspective view of the tail lamp.
FIG. 7 is a view from the rear of the tail lamp, from which clear covers have been removed.
FIG. 8 is a sectional view showing a vertical section of the tail lamp along a vehicle center.
FIG. 9 is a view from the front of the tail lamp.

### DETAILED DESCRIPTION OF THE PREFERRED EMBODIMENTS

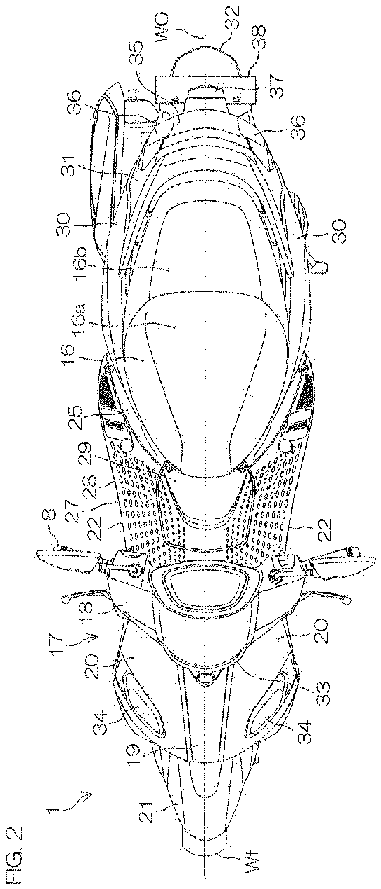

Front-rear, up-down, and right-left directions are defined on the basis of a viewpoint of a forward-facing rider who sits on a scooter 1 in a reference posture in which the scooter 1 travels straight ahead on a horizontal plane (in which a steering handle 8 is disposed at a straight-traveling position). The right-left direction corresponds to a vehicle width direction (a width direction of the scooter 1). A vehicle center WO (refer to FIG. 2) corresponds to a vertical plane that passes through a center line of a head pipe 3 and that is perpendicular to a rotational center of a rear wheel Wr. The scooter 1 in the reference posture will be hereinafter described unless specific notice is given. A front view, a side view, and a plan view mean a front view, a side view, and a plan view of the scooter 1, respectively unless specific notice is given.

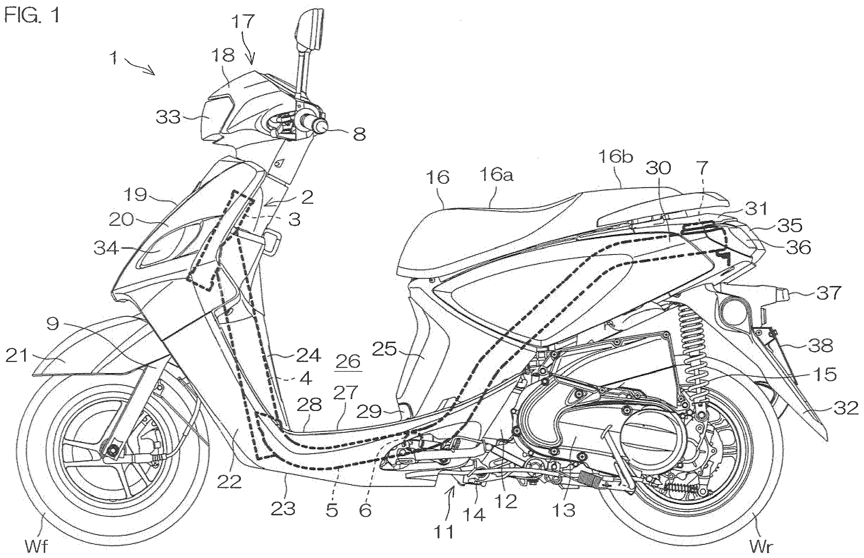

FIG. 1 is a left side view of a scooter 1 according to a preferred embodiment of the present invention. FIG. 2 is a plan view of the scooter 1. In FIG. 1, a frame 2 is indicated with thick dashed lines.

As shown in FIG. 1, the scooter 1, which is an example of a straddled vehicle, includes the frame 2 covered with an exterior cover 17. The frame 2 includes a head pipe 3, extending rearward and upward, a down frame 4, extending rearward and downward from the head pipe 3, and a pair of right and left lower frames 5, extending rearward from a lower portion of the down frame 4. The frame 2 further includes a front cross member 6, connected to the pair of lower frames 5, and a rear cross member 7, connected to the pair of lower frames 5 behind the front cross member 6. The pair of lower frames 5 are disposed on a right side and a left side of the vehicle center WO, respectively. The front cross member 6 is disposed between the front wheel Wf and the rear wheel Wr, and the rear cross member 7 is disposed above the rear wheel Wr.

The scooter 1 includes a steering handle 8, steered by a rider, and a front fork 9, rotatably supporting the front wheel Wf. The steering handle 8 is coupled to the front fork 9, which is an example of a front wheel supporting member. The steering handle 8 and the front fork 9 are pivotable with respect to the frame 2 around a steering axis corresponding to a central line of the head pipe 3. When the steering handle 8 is steered, the front wheel Wf is pivoted in right and left directions together with the steering handle 8. The scooter 1 is thereby steered.

The scooter 1 includes a swing unit 11, swingable in the up-down direction with respect to the frame 2. The swing unit 11 includes an engine 12, which generates a motive power that makes the scooter 1 travel, and a driving mechanism 13, transmitting the motive power of the engine 12 to the rear wheel Wr. The swing unit 11 is mounted on the frame 2 via a pivot shaft 14 extending in the vehicle width direction. The rear wheel Wr is rotatably supported by a rear end portion of the swing unit 11. The rear wheel Wr and the swing unit 11 are swingable in the up-down direction around the pivot shaft 14 with respect to the frame 2. An upper end portion of a rear cushion 15 is mounted on the frame 2 and a lower end portion of the rear cushion 15 is mounted on a rear end portion of the swing unit 11.

The scooter 1 includes a straddle seat 16, on which the rider sits. FIG. 1 shows an example where the seat 16 is provided with a main seat 16a, on which the rider sits, and a tandem seat 16b, on which a passenger sits. The seat 16 may be for one person. The seat 16 is disposed behind the head pipe 3. The seat 16 is disposed above the pair of lower frames 5. The seat 16 may be supported directly by the pair of lower frames 5 or may be supported indirectly by the pair of lower frames 5. A fuel tank, storing fuel supplied to the engine 12, is disposed, for example, below the seat 16.

The exterior cover 17 includes a handle cover 18, disposed in front of and behind the steering handle 8, a front cover 19, disposed in front of the head pipe 3, and a pair of right and left front side covers 20, respectively disposed at a right side and a left side of the front cover 19. A front fender 21 is disposed above the front wheel Wf. The exterior cover 17 further includes a pair of right and left under side covers 22, respectively disposed at a right side and a left side of the pair of lower frames 5, and an undercover 23, disposed between lower end portions of the pair of underside covers 22.

The exterior cover 17 includes a front inner cover 24, disposed behind the head pipe 3, and a rear inner cover 25, disposed behind the front inner cover 24. The exterior cover 17 further includes a footboard 28, disposed above the pair of lower frames 5, and a board cover 29 (see FIG. 2), disposed above the footboard 28. The exterior cover 17 defines a foot space 26, in which the feet and legs of the rider are disposed, between the front inner cover 24 and the rear inner cover 25 in the front-rear direction. The front inner cover 24 corresponds to a leg shield disposed in front of the legs of the rider.

The feet of the rider are placed on a flat surface 27 of the exterior cover 17. The flat surface 27 may be a completely flat surface without any recesses or projections or may be a substantially flat surface provided with recesses or projections that will not obstruct the placing of feet (for example, recesses or projection of approximately 1 to 2cm). A vertical section of the flat surface 27 orthogonal to the vehicle center WO extends horizontally from a right end of the vertical section to a left end of the vertical section. Respective portions of the vertical surface of the flat surface 27 are disposed at the same height.

The exterior cover 17 includes a pair of right and left rear side covers 30, respectively disposed at a right side and a left side of the pair of lower frames 5, a rear cover 31, disposed between the pair of rear side covers 30, and a mud guard 32, disposed above and behind the rear wheel Wr. The rear side covers 30 are disposed below the seat 16 in a side view. The rear cover 31 is disposed behind the rear side covers 30 in a side view. The mud guard 32, which corresponds to a rear fender, extends rearward and downward from the rear side covers 30 in a side view.

The scooter 1 includes a headlamp 33 that emits light forward and two front flashers 31 that flash in accordance with an operation of the rider. The scooter 1 further includes a tail lamp 35 that emits light rearward, two rear flashers 36 that flash in accordance with an operation of the rider, and a license lamp 37 that illuminates a license plate 38, disposed behind the mud guard 32. The headlamp 33 and the front flashers 34 are disposed further to the front than the seat 16. The tail lamp 35, the rear flashers 36, and the license lamp 37 are disposed further to the rear than a front end of the rear wheel Wr.

The mud guard 32, which catches pebbles and other flying objects flying upward from the rear wheel Wr, shall now be described.

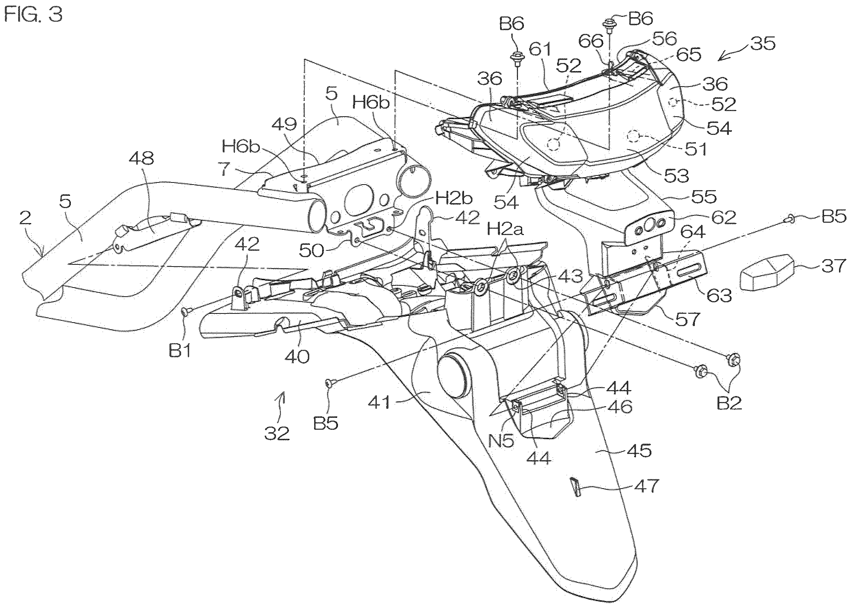

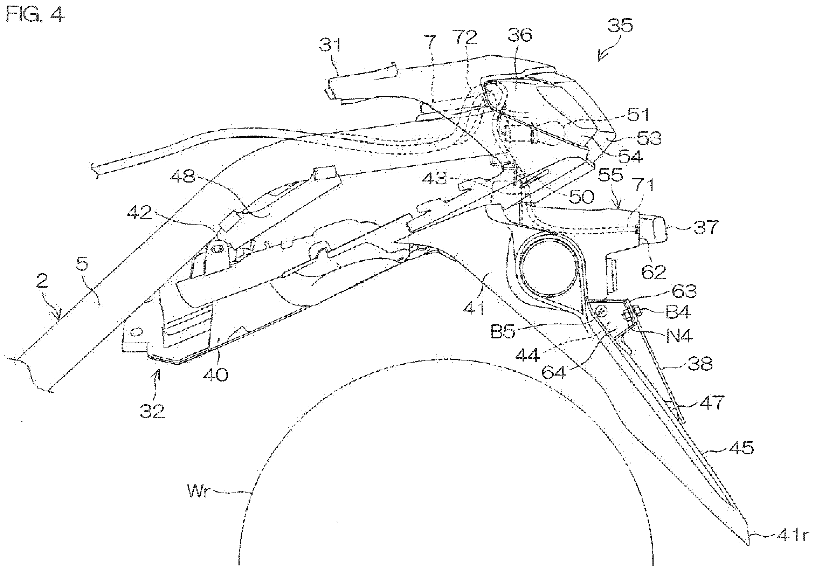

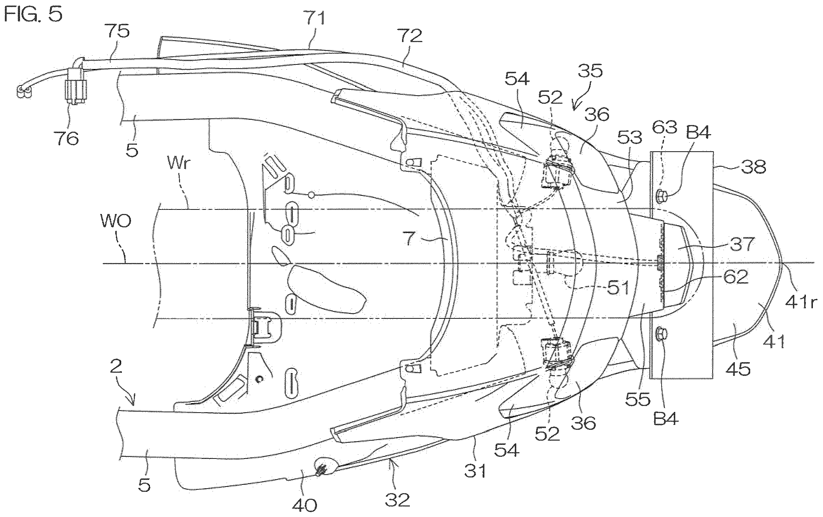

FIG. 3 is an exploded perspective view showing the frame 2, the mud guard 32, the tail lamp 35, and the license lamp 37. FIG. 4 is a left side view showing the frame 2, the mud guard 32, the tail lamp 35, and the license lamp 37. FIG. 5 is a plan view showing the frame 2, the mud guard 32, the tail lamp 35, and the license lamp 37.

As shown in FIG. 4, the mud guard 32 includes an upper guard 40, disposed between the rear wheel Wr and the frame 2 in a side view, and a rear guard 41, extending rearward and downward from the upper guard 40. As shown in FIG. 3, the mud guard 32 further includes a pair of right and left front fastening portions 42, extending upward from the upper guard 40, an intermediate fastening portion 43, extending upward from the rear guard 41, and a pair of right and left rear fastening portions 44, extending upward from the rear guard 41 at positions further to the rear than the intermediate fastening portion 43.

As shown in FIG. 5, the upper guard 40 overlaps with the lower frames 5, the rear cross member 7, and the rear wheel Wr in a plan view. The upper guard 40 is disposed below the lower frames 5 and the rear cross member 7. The upper guard 40 is disposed above the rear wheel Wr. The rear guard 41 overlaps with the rear wheel Wr in a plan view. A rear end portion 41r of the rear guard 41 is disposed behind the rear wheel Wr.

As shown in FIG. 3, the rear guard 41 includes a back surface 45, which, in a state where a lamp base 55 of the headlamp 35 is mounted on the mud guard 32, is positioned at right side, left side, and lower side of the lamp base 55 in a rear view of the scooter 1, a recess 46, recessed forward from the back surface 45, and a projection 47, projecting rearward from the back surface 45. The intermediate fastening portion 43 and the rear fastening portions 44 extend upward from a bottom surface of the recess 46. The lamp base 55 is fitted into the recess 46. The projection 47 is disposed at a position further to the rear and lower than the recess 46. As shown in FIG. 4, the projection 47 is disposed in front of the license plate 38. The projection 47 contacts a lower portion of a front surface of the license plate 38 to support the license plate 38.

As shown in FIG. 3, the front fastening portions 42 are disposed further to the front than the intermediate fastening portion 43 and the rear fastening portions 44. The intermediate fastening portion 43 is disposed further to the front than the rear fastening portions 44. The intermediate fastening portion 43 is disposed higher than the front fastening portions 42 and the rear fastening portions 44. The rear fastening portions 44 are disposed lower than the front fastening portions 42. The pair of front fastening portion 42 are disposed respectively at a right side and a left side of the vehicle center WO. The intermediate fastening portion 43 and the rear fastening portions 44 overlap with the vehicle center WO. As described below, the rear fastening portions 44 are fastened to the lamp base 55 of the tail lamp 35.

The pair of front fastening portions 42 are disposed at outer sides of a pair of stays 48 in the vehicle width direction. The pair of stays 48 are portions of the frame 2. The pair of stays 48 are respectively welded to the pair of lower frames 5. The pair of stays 48 are disposed between the pair of front fastening portions 42. Each front fastening portion 42 is fixed to the stay 48 by a bolt B1 and a nut.

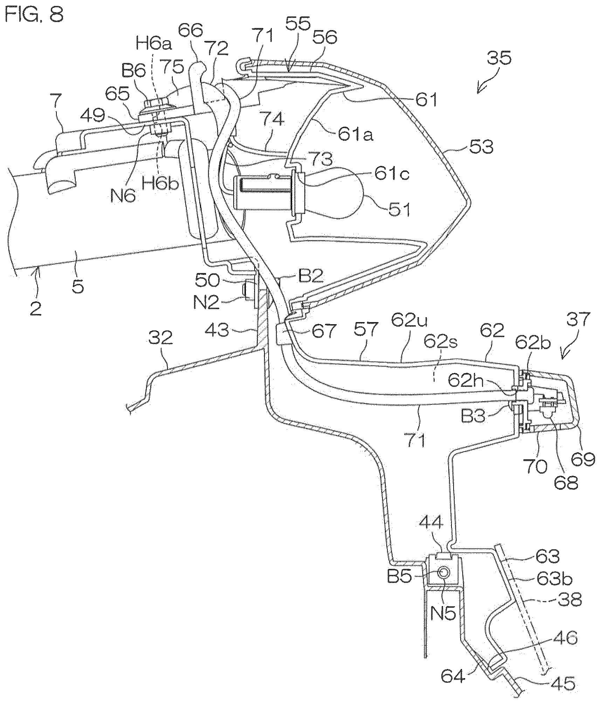

As shown in FIG. 4, the intermediate fastening portion 43 is disposed behind a lower supporting portion 50 of the rear cross member 7. The lower supporting portion 50 is disposed at a position further to the rear and lower than the lower frame 5 in a side view. The intermediate fastening portion 43 overlaps with the lower supporting portion 50 from its rear. In this state, the intermediate fastening portion 43 is fastened to the lower supporting portion 50 by two pairs of bolts B2 and nuts N2 (see FIG. 8).

Specifically, as shown in FIG. 3, the intermediate fastening portion 43 includes two penetrating holes H2a penetrating through the intermediate fastening portion 43 in the front-rear direction. The lower supporting portion 50 includes two penetrating holes H2b penetrating through the lower supporting portion 50 in the front-rear direction. The two penetrating holes H2a of the intermediate fastening portion 43 are respectively disposed behind the two penetrating holes H2b of the lower supporting portion 50. Shaft portions of the bolts B2 are inserted from the rear into the penetrating holes H2a of the intermediate fastening portion 43 and the penetrating holes H2b of the lower supporting portion 50. The two nuts N2 are disposed in front of the lower supporting portion 50. The intermediate fastening portion 43 and the lower supporting portion 50 are sandwiched in the front-rear direction by the two pairs of bolts B2 and nuts N2. The intermediate fastening portion 43 and the lower supporting portion 50 are thereby fixed.

The tail lamp 35 shall now be described.

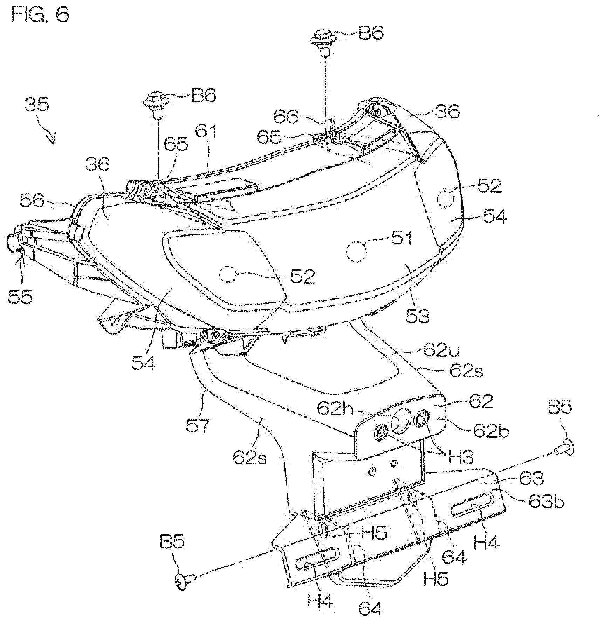

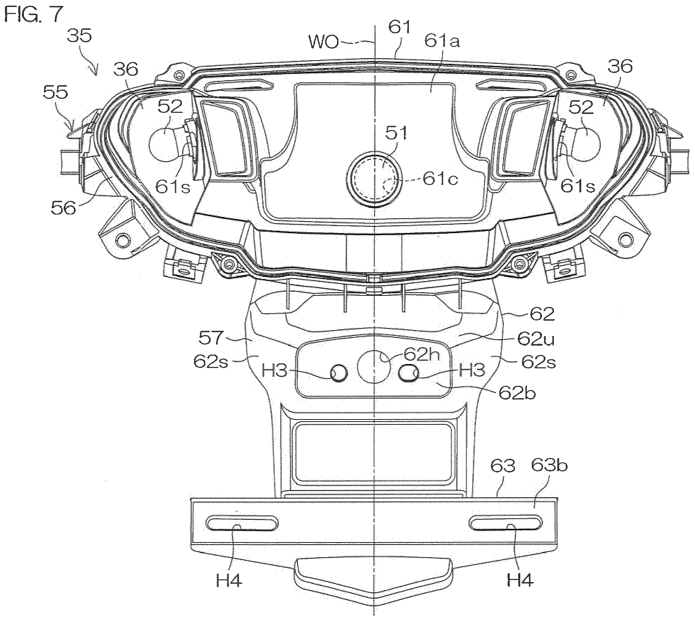

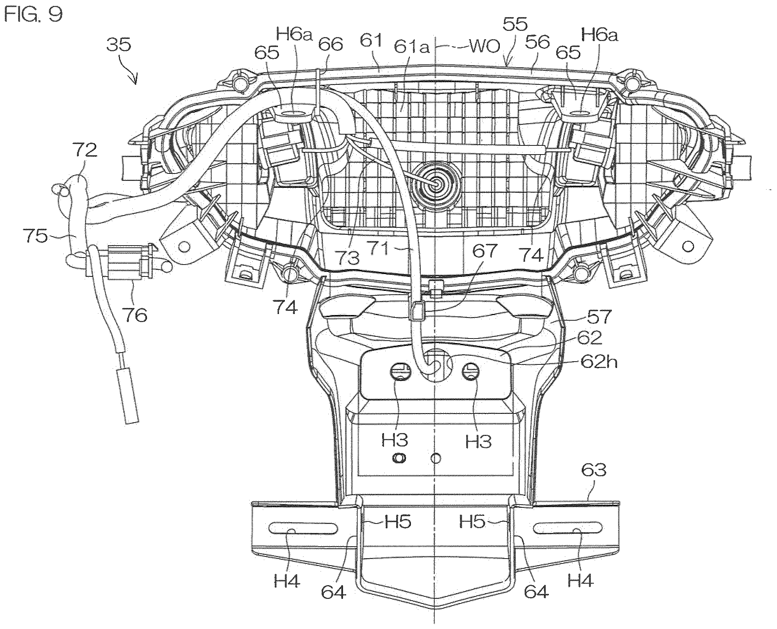

FIG. 6 is a perspective view of the tail lamp 35. FIG. 7 is a view from the rear of the tail lamp 35, from which clear covers have been removed. FIG. 8 is a sectional view showing a vertical section of the tail lamp 35 along the vehicle center WO. FIG. 9 is a view from the front of the tail lamp 35.

The tail lamp 35 is a rear lamp unit that includes a tail lamp portion and a rear flasher portion. As shown in FIG. 6, the tail lamp 35 includes three light sources 51 and 52, emitting light in accordance with the supplying of power, a lamp base 55, holding the three light sources 51 and 52, and three clear covers 53 and 54, disposed behind the three light sources 51 and 52 and the lamp base 55.

As shown in FIG. 7, the three light sources 51 and 52 include a central light source 51, disposed at the vehicle center WO, and a pair of right and left lateral light sources 52, disposed respectively at a right side and a left side of the vehicle center WO. The central light source 51 is the light source of the tail lamp 35. The lateral light sources 52 are light sources of the rear flashers 36. The central light source 51 and the lateral light sources 52 are all electric bulbs. At least one of the central light source 51 and the lateral light source 52 may be an LED or LEDs.

The central light source 51 is inserted in a central hole 61c penetrating through a housing portion 61 of the lamp base 55 in the front-rear direction. A light emitting portion of the central light source 51 is disposed behind the central hole 61c. Each lateral light source 52 is inserted in a lateral hole 61s penetrating through the housing portion 61 of the lamp base 55 in the vehicle width direction. A light emitting portion of each lateral light source 52 is disposed at an outer side of the corresponding lateral hole 61s in the vehicle width direction. The three light sources 51 and 52 are housed in light source housing chambers defined by the lamp base 55 and the three clear covers 53 and 54.

As shown in FIG. 6, the three clear covers 53 and 54 include a central clear cover 53, disposed behind the central light source 51, and a pair of right and left lateral clear covers 54, disposed respectively behind the pair of lateral light sources 52. The pair of lateral clear covers 54 are respectively disposed at a right side and a left side of the central clear cover 53. Each lateral clear cover 54 includes a portion disposed behind the corresponding lateral light source 52 and a portion disposed at an outer side of the lateral light source 52 in the vehicle width direction. The central clear cover 53 and the lateral clear covers 54 are members separate from the lamp base 55 and mounted on the lamp base 55.

As shown in FIG. 8, the lamp base 55 is an integral member made of synthetic resin. The lamp base 55 includes an upper base 56, disposed in front of the three clear covers 53 and 54, and a lower base 57, disposed below the upper base 56. The lower base 57 is shorter than the upper base 56 in the vehicle width direction and is longer than the upper base 56 in the up-down direction. The lower base 57 is disposed behind the mud guard 32. The lower base 57 is fitted to the recess 46 of the mud guard 32.

The lamp base 55 includes the housing portion 61, disposed in front of the three clear covers 53 and 54, a lamp pedestal portion 62, on which the license lamp 37 is mounted, and a plate pedestal portion 63, on which the license plate 38 is mounted. The lamp base 55 further includes a pair of right and left upper fastening portions 65, fastened to the frame 2, and a pair of right and left lower fastening portions 64, fastened to the mud guard 32.

The housing portion 61 holds the three light sources 51 and 52. The housing portion 61 includes a central housing portion 61a housing the light emitting portion of the central light source 51. The central housing portion 61a includes a U-shaped vertical cross section that opens rearward. The lamp pedestal portion 62 is disposed lower than the housing portion 61. The plate pedestal portion 63 is disposed lower than the lamp pedestal portion 62. The upper fastening portions 65 project forward from the housing portion 61. The lower fastening portions 65 project forward from the plate pedestal portion 63.

The lamp pedestal portion 62 includes an upper surface 62u, extending rearward from the housing portion 61, a pair of right and left side surfaces 62s, extending downward from a right edge and a left edge of the upper surface 62u, and a back surface 62b, extending downward from a rear edge of the upper surface 62u. As shown in FIG. 7, the lamp pedestal portion 62 includes two penetrating holes H3, opening at the back surface 62b of the lamp pedestal portion 62, and a wiring hole 62h, opening at the back surface 62b of the lamp pedestal portion 62. The wiring hole 62h is disposed between the two through holes H3.

As shown in FIG. 8, the license lamp 37 overlaps with the back surface 62b of the lamp pedestal portion 62 from the rear. Two bolts B3, which fix the license lamp 37 to the lamp pedestal portion 62, are respectively inserted from the front into the two penetrating holes H3 of the lamp pedestal portion 62. The license lamp 37 is fixed to the lamp pedestal portion 62 by the two bolts B3. A first wiring 71, supplying power to the license lamp 37, is inserted in the wiring hole 62h.

The license lamp 37 includes a light source 68, emitting light in accordance with the supplying of power, a lamp housing 69, housing the light source 68, and a transmitting window 70, transmitting the light of the light source 68 to below the lamp housing 69. The transmitting window 70 is exposed at a lower surface of the lamp housing 69. The light of the light source 68 is illuminated downward from the transmitting window 70. The transmitting window 70 is disposed above the license plate 38. Therefore, when the light source 68 emits light, the license plate 38 is illuminated by the light of the light source 68. The light source 68 is an LED. The light source 68 may an electric bulb instead.

As shown in FIG. 7, the plate pedestal portion 63 includes a back surface 63b of rectangular shape extending in the vehicle width direction. The back surface 63b of the plate pedestal portion 63 is longer than the license lamp 37 in the vehicle width direction and shorter than the housing portion 61 in the vehicle width direction. An upper portion of the front surface of the license plate 38 is placed on the back surface 63b of the plate pedestal portion 63. In this state, the license plate 38 is fixed to the plate pedestal portion 63 by two pairs of bolts B4 (see FIG. 4) and nuts N4 (see FIG. 4). The two bolts B4 are inserted respectively in a pair of right and left penetrating holes H4, penetrating through the plate pedestal portion 63 in the front-rear direction. The penetrating holes H4 open at the back surface 63b of the plate pedestal portion 63. The penetrating holes H4 are slots extending in the vehicle width direction.

As shown in FIG. 8, the pair of lower fastening portions 64 are fitted to the recess 46 of the mud guard 32. Tip portions of the lower fastening portions 64 are supported by the bottom surface of the recess 46. The pair of lower fastening portions 64 are respectively disposed at a right side and a left side of the pair of rear fastening portions 44 of the mud guard 32. The rear fastening portions 44 are disposed in an interior of the lamp base 55. The rear fastening portions 44 are hidden by the lamp base 55 in both rear view and side view (see FIG. 4). The lower fastening portions 64 are fastened to the rear fastening portions 44 by two pairs of bolts B5 and nuts N5.

Specifically, as shown in FIG. 6, the pair of lower fastening portions 64 of the lamp base 55 include two penetrating holes H5, respectively penetrating through the pair of lower fastening portions 64 in the vehicle width direction. As shown in FIG. 8, the two nuts N5 are mounted on a pair of rear fastening portions 44 of the mud guard 32. The nuts N5 are spring nuts, each includes a U-shaped plate that opens downwardly. The two penetrating holes H5 of the lamp base 55 respectively overlap with female screw holes of the two nuts N5. Shaft portions of the bolts B5 are inserted in the penetrating holes H5 of the lower fastening portions 64 and the female screw holes of the nuts N5. The lower fastening portions 64 are thereby fixed to the rear fastening portions 44.

As shown in FIG. 6, the penetrating holes H5 of the lower fastening portions 64 are disposed at inner sides in the vehicle width direction of the penetrating holes H4 of the plate pedestal portion 63. Heads of the bolts B5 fixing the lower fastening portions 64 to the rear fastening portions 44 are disposed in front of the plate pedestal portion 63. In a vehicle rear view, the heads of the bolts B5 are hidden by the plate pedestal portion 63. Similarly, in the vehicle rear view, the penetrating holes H5 of the lower fastening portions 64 are hidden by the plate pedestal portion 63. The scooter 1 is thereby improved in aesthetic appearance.

As shown in FIG. 8, the upper fastening portions 65 are disposed at positions higher than and further to the front than the three light sources 51 and 52. The upper fastening portions 65 are placed on an upper supporting portion 49 of the rear cross member 7. The upper supporting portion 49 is disposed at a position higher than and further to the front than the lower supporting portion 50 of the rear cross member 7. The upper supporting portion 49 is disposed above the lower frame 5 in a side view. The pair of upper fastening portions 65 are fastened to the upper supporting portion 49 by two pairs of bolts B6 and nuts N6.

Specifically, the upper fastening portions 65 of the lamp base 55 are placed on the upper supporting portion 49 of the rear cross member 7. Each upper fastening portion 65 includes a penetrating hole H6a, penetrating through the upper fastening portion 65 in the up-down direction. The upper supporting portion 49 includes two penetrating holes H6b, penetrating through the upper supporting portion 49 in the up-down direction. The penetrating holes H6a of the pair of upper fastening portions 65 are respectively disposed above the two penetrating holes H6b of the upper supporting portion 49. Shaft portions of the bolts B6 are inserted from above in the penetrating holes H6a of the upper fastening portions 65 and the penetrating holes H6b of the upper supporting portion 49. The shaft portions of the bolts B6 are attached to the nuts N6 disposed below the upper supporting portion 49. The upper fastening portions 65 are thereby fixed to the upper supporting portion 49.

As shown in FIG. 8, the first wiring 71 supplying power to the license lamp 37 extends forward from the license lamp 37. The first wiring 71 is inserted in the wiring hole 62h, penetrating through the lamp pedestal portion 62 in the front-rear direction. The first wiring 71 passes between the housing portion 61 of the lamp base 55 and the intermediate fastening portion 43 of the mud guard 32 in the up-down direction. The first wiring 71 further passes between the housing portion 61 of the lamp base 55 and the rear cross member 7 in the up-down direction. The first wiring 71 extends to a position higher than the cross member 7 and the central light source 51.

The first wiring 71 is held by a lower holder portion 67 and an upper holder portion 66 provided at the lamp base 55. A second wiring 72, supplying power to the tail lamp 35 and the rear flashers 36, is held by the upper holder portion 66. That is, the upper holder portion 66 holds both the first wiring 71 and the second wiring 72.

The lower holder portion 67 holds the first wiring 71 between the mud guard 32 and the lamp base 55. The lower holder portion 67 is disposed at a height between the license lamp 37 and the central light source 51. The lower holder portion 67 is disposed behind the intermediate fastening portion 43 of the mud guard 32. The lower holder portion 67 is separated rearward from the intermediate fastening portion 43. As shown in FIG. 9, the lower holder portion 67 defines a U-shaped groove, penetrating through the lower holder portion 67 in the up-down direction and open outward in the vehicle width direction. The first wiring 71 is fitted in the groove of the lower holder portion 67. The first wiring 71 is thereby held by the lower holder portion 67.

The upper holder portion 66 extends upward from the upper fastening portion 65 at the right side (the upper fastening portion 65 at the left side in FIG. 9). As shown in FIG. 8, the upper holder portion 66 is disposed further to the rear than the penetrating hole H6a provided in the upper fastening portion 65 at the right side. The upper holder portion 66 defines a U-shaped groove, penetrating through the upper holder portion 66 in the vehicle width direction and open upward. The first wiring 71 and the second wiring 72 are fitted in the groove of the upper holder portion 66. The first wiring 71 and the second wiring 72 are thereby held by the upper holder portion 66. The first wiring 71 and the second wiring 72 are further held by an upper surface of the upper fastening portion 65 at the right side.

As shown in FIG. 9, the second wiring 72 is a wire harness, formed by bundling together a plurality of wirings. The second wiring 72 includes a central wiring 73, connected to the central light source 51, and a pair of lateral wirings 74, respectively connected to the pair of lateral light sources 52. The second wiring 72 further includes an outer tube 75, surrounding the central wiring 73 and the pair of lateral wirings 74, and a connector 76, connected to the central wiring 73 and the pair of lateral wirings 74.

An end portion at one side of the central wiring 73 and end portions at one side of the lateral wirings 74 are disposed outside the outer tube 75. The end portion at the one side of the central wiring 73 is attached to the central wiring 51. The end portions at the one side of the lateral wirings 74 are attached to the lateral light sources 52. The end portion at the one side of the central wiring 73 and the end portions at the one side of the lateral wirings 74 are disposed behind the housing portion 61. An end portion at the other side of the central wiring 73 and end portions at the other side of the lateral wirings 74 are attached to the connector 76.

As shown in FIG. 8, the first wiring 71 and the second wiring 72 pass behind the rear cross member 7 in the up-down direction. As shown in FIG. 5, the first wiring 71 and the second wiring 72 overlap with the rear cross member 7 in plan 7. The first wiring 71 and the second wiring 72 pass above the lower frame 5 at the right side in the vehicle width direction. The first wiring 71 and the second wiring 72 extend in the front-rear direction at a side of the lower frame 5 at the right side in a plan view. The connector 76 of the second wiring 72 is connected to a power supply source, such as a battery or a generator, etc. Similarly, the first wiring 71 is connected to a power supply source, such as a battery or a generator, etc.

As described above, with the present preferred embodiment, the lamp pedestal portion 62, on which the license lamp 37 is mounted, is integral, not to the mud guard 32, but to the housing portion 61 of the tail lamp 35. The upper fastening portions 65 of the tail lamp 35 are mounted on the frame 2 without interposition of the mud guard 32. The weights of the lamp pedestal portion 62 and the license lamp 37 and loads due to these weights are thus transmitted to the frame 2 via the tail lamp 35. The strength required of the mud guard 32 can thus be decreased and the weight of the mud guard 32 can be reduced.

Further, the lamp pedestal portion 62 is integral to the housing portion 61 of the tail lamp 35 and therefore the lamp pedestal portion 62 and the housing portion 61 do not have to be mounted individually on the frame 2. Ease of assembly of the scooter 1 can thereby be improved. In addition, the first wiring 71, supplying power to the license lamp 37, extends to the position higher than the mud guard 32 upon passing between the mud guard 32 and the lamp pedestal portion 62 without penetrating through the mud guard 32. Laying out of the first wiring 71 is thus easy in comparison to a case where the first wiring 71 penetrates through the mud guard 32.

With the present preferred embodiment, not only the lamp pedestal portion 62 but the plate pedestal portion 63, on which the license plate 38 is mounted, is also integral to the housing portion 61 of the tail lamp 35. Loads applied to the mud guard 32 from the license plate 38 and the plate pedestal portion 63 can thus be reduced. The weight of the mud guard 32 can thus be reduced further.

With the present preferred embodiment, the intermediate fastening portion 43 of the mud guard 32 and the upper fastening portions 65 of the lamp base 55 are fastened to the same member, that is, the rear cross member 7 of the frame 2. Therefore, in comparison to a case where the intermediate fastening portion 43 of the mud guard 32 and the upper fastening portions 65 of the lamp base 55 are fastened to separate members, the number of parts of the frame 2 can be reduced. The ease of assembly of the scooter 1 can thereby be improved further.

With the present preferred embodiment, the upper holder portion 66, which holds the first wiring 71, is provided at the tail lamp 35. The upper holder portion 66 holds the first wiring 71 at the position higher than the three light sources 51 and 52 of the tail lamp 35. The first wiring 71 can thus be guided to a high position and a portion of the first wiring 71 can be disposed at a position higher than the mud guard 32.

With the present preferred embodiment, the upper holder portion 66 of the tail lamp 35 holds not only the first wiring 71 that supplies power to the license lamp 37 but also the second wiring 72 that supplies power to the tail lamp 35. The number of holder portions can thus be reduced while securely holding the first wiring 71 and the second wiring 72. Further, the tail lamp 35 can be made lightweight because the number of holder portions can be reduced.

With the present preferred embodiment, the first wiring 71 is held not only by the upper holder portion 66 of the lamp base 55 but is also supported by the upper surface of an upper fastening portion 65 of the lamp base 55. A movement amount of the first wiring 71 with respect to the lamp base 55 can thereby be reduced further. The upper fastening portion 65 is fastened to the frame 2 and is therefore less likely to move with respect to the frame 2 in comparison to other portions of the lamp base 55. The upper holder portion 66 extends upward from such a stable upper fastening portion 65. The movement of the first wiring 71 with respect to the frame 2 can thus be restricted reliably.

With the present preferred embodiment, the bolts B5 and the bolts B6 are inserted respectively in the penetrating holes H5 of the lower fastening portions 64 and the penetrating holes H6 of the upper fastening portions 65. The upper fastening portions 65 and the lower fastening portions 64 are thereby fastened to the frame 2. Further, the penetrating holes H5 of the lower fastening portions 64 and the penetrating holes H6 of the upper fastening portion 65 penetrate through the lamp base 55 in mutually different directions. The lamp base 55 is thereby fastened in a plurality of directions and a fastening strength of the lamp base 55 with respect to the frame 2 can thus be increased.

With the present preferred embodiment, the lower fastening portions 64 of the lamp base 55 that are fastened to the mud guard 32 overlap, in the vehicle rear view, with the plate pedestal portion 63, on which the license plate 38 is mounted. The plate pedestal portion 63 is disposed behind the lower fastening portions 64. The lower fastening portions 64 are thus hidden by the plate pedestal portion 63 in the vehicle rear view. The bolts B5 that fasten the lower fastening portions 64 to the mud guard 32 are thus hidden by the plate pedestal portion 63 in the vehicle rear view. The bolts B5 and the lower fastening portions 64 can thereby be protected by the plate pedestal portion 63.

### Other Preferred Embodiments

Although preferred embodiments have been described above, but various modifications of the embodiments are possible.

For example, the rear flashers 36 do not have to be integral to the tail lamp 35 and may be parts independent of the tail lamp 35.

The plate pedestal portion 63, on which the license plate 37 is mounted, does not have to be integral to the housing portion 61 of the lamp base 55.

At least one of the first wiring 71 and the second wiring 72 does not have to pass behind the rear cross member 7. For example, the first wiring 71 may pass in front or along a side of the rear cross member 7 or may be inserted in a penetrating hole, penetrating through the rear cross member 7 in the up-down direction. The same applies to the second wiring 72.

At least either of the intermediate fastening portion 43 of the mud guard 32 and the upper fastening portions 65 of the lamp base 55 may be fastened to a member other than the rear cross member 7.

The intermediate fastening portion 43 of the mud guard 32 may be disposed, not behind, but in front of the lower supporting portion 50 of the rear cross member 7.

The upper holder portion 66 that holds the first wiring 71 and the second wiring 72 may extend downward from an upper fastening portion 65 of the lamp base 55. That is, the first wiring 71 and the second wiring 72 do not have to be supported by the upper surface of the upper fastening portion 65.

The upper holder portion 66 may hold just one of either of the first wiring 71 and the second wiring 72.

At least one of the upper holder portion 66 and the lower holder portion 67 may be omitted from the lamp base 55.

The lower fastening portions 64 of the lamp base 55 do not have to be hidden by the plate pedestal portion 63 in the vehicle rear view. That is, the lower fastening portions 64 may be visible in the vehicle rear view.

The straddled vehicle is not limited to a scooter type motorcycle in which the engine 12, which is an example of a power source, is swingable with respect to the frame 2, but may be an underbone type motorcycle in which the power source is fixed to the frame 2. Also the straddled vehicle is not limited to a motorcycle, but may be a vehicle including not less than 3 wheels, an all-terrain vehicle, or a snowmobile.

Two or more of any of the arrangements described above may be combined.

## Claims

1. A straddled vehicle (1) comprising:
a frame (2);
a rear wheel (Wr) disposed below the frame (2) in a vehicle side view;
a mud guard (32) including a portion disposed between the frame (2) and the rear wheel (Wr) in the vehicle side view and a portion disposed behind the rear wheel (Wr);
a tail lamp (35) disposed above the mud guard (32);
a license lamp (37) illuminating a license plate (38) disposed behind the mud guard (32); and
a first wiring (71) supplying power to the license lamp (37);
wherein the tail lamp (35) includes a light source (51) emitting light rearward, a lamp base (55) being a separate member from the mud guard (32) and holding and housing the light source (51), and a clear cover (53, 54) being a separate member from the lamp base (55), being disposed behind the light source (51) and transmitting the light of the light source (51),
wherein the lamp base (55) includes
a housing portion (61) being open rearward and holding and housing the light source (51),
a lamp pedestal portion (62) being integral to the housing portion (61) and on which the license lamp (37) is mounted,
an upper fastening portion (65) fastened to the frame (2) without interposition of the mud guard (32), and
a lower fastening portion (64) disposed behind the mud guard (32) and fastened to the mud guard (32), and
the first wiring (71) extends to a position higher than the mud guard (32) while passing between the mud guard (32) and the lamp pedestal portion (62) without penetrating through the mud guard (32).

2. The straddled vehicle (1) according to Claim 1, wherein the lamp base (55) further includes a plate pedestal portion (63) being integral to the housing portion (61), and on which the license plate (38) is mounted.

3. The straddled vehicle (1) according to Claim 1, wherein the lamp base (55) further includes a plate pedestal portion (63), on which the license plate (38) is mounted, and
wherein the plate pedestal portion (63) is disposed behind the lower fastening portion (64) so as to overlap with the lower fastening portion (64) in a vehicle rear view.

4. The straddled vehicle (1) according to any one of Claims 1 to 3, further comprising:
a seat (16), on which a rider sits; and
wherein the frame (2) includes a pair of right and left lower frames (5) disposed below the seat (16), and a rear cross member (7) extending, above the rear wheel (Wr), from one of the pair of lower frames (5) to the other of the pair of lower frames (5), and
wherein the first wiring (71) passes through a space behind the rear cross member (7).

5. The straddled vehicle (1) according to Claim 4, further comprising:
a second wiring (72) supplying power to the tail lamp (35); and
wherein the first wiring (71) and the second wiring (72) pass through a space behind the rear cross member (7).

6. The straddled vehicle (1) according to Claim 5, wherein the lamp base (55) further includes an upper holder portion (66) holding the first wiring (71) at a position higher than the light source (51) of the tail lamp (35) and
wherein the upper holder portion (66) holds the second wiring (72) in addition to the first wiring (71).

7. The straddled vehicle (1) according to any one of Claims 4 to 6, wherein the mud guard (32) further includes an intermediate fastening portion (43) fastened to the frame (2), and
wherein the intermediate fastening portion (43) of the mud guard (32) and the upper fastening portion (65) of the lamp base (55) are fastened to the rear cross member (7).

8. The straddled vehicle (1) according to any one of Claims 1 to 3, further comprising:
a seat (16), on which a rider sits; and
wherein the frame (2) includes a pair of right and left lower frames (5), disposed below the seat (16), and a rear cross member (7), extending, above the rear wheel (Wr), from one of the pair of lower frames (5) to the other of the pair of lower frames (5),
wherein the mud guard (32) further includes an intermediate fastening portion (43) fastened to the frame (2), and
wherein the intermediate fastening portion (43) of the mud guard (32) and the upper fastening portion (65) of the lamp base (55) are fastened to the rear cross member (7).

9. The straddled vehicle (1) according to any one of Claims 1 to 8, wherein the lamp base (55) further includes a lower holder portion (67) holding the first wiring (71) between the mud guard (32) and the lamp base (55).

10. The straddled vehicle (1) according to any one of Claims 1 to 4 and 8, wherein the lamp base (55) further includes an upper holder portion (66) holding the first wiring (71) at a position higher than the light source (51) of the tail lamp (35).

11. The straddled vehicle (1) according to Claim 10, further comprising:
a second wiring (72), supplying power to the tail lamp (35); and
wherein the upper holder portion (66) holds the second wiring (72) in addition to the first wiring (71).

12. The straddled vehicle (1) according to Claim 10 or 11, wherein the upper holder portion (66) extends upward from the upper fastening portion (65) of the lamp base (55) and
the upper fastening portion (65) includes an upper surface that supports the first wiring (71).

13. The straddled vehicle (1) according to any one of Claims 1 to 12, wherein the upper fastening portion (65) of the lamp base (55) includes a penetrating hole (H6a), in which is inserted a bolt (B6) that fastens the lamp base (55) to the frame (2),
wherein the lower fastening portion (64) of the lamp base (55) includes a penetrating hole (H5), in which is inserted a bolt (B5) that fastens the lamp base (55) to the mud guard (32), and
wherein the penetrating hole (H6a) of the upper fastening portion (65) and the penetrating hole (H5) of the lower fastening portion (64) penetrate through the lamp base (55) in mutually different directions.

## Patentansprüche

1. Ein rittlings zu fahrendes Fahrzeug (1), das folgende Merkmale aufweist:
einen Rahmen (2);
ein in einer Seitenansicht des Fahrzeugs unter dem Rahmen (2) angeordnetes Hinterrad (Wr);
einen Kotflügel (32), der eine in der Seitenansicht des Fahrzeugs zwischen dem Rahmen (2) und dem Hinterrad (Wr) angeordneten Abschnitt und einer hinter dem Hinterrad (Wr) angeordneten Abschnitt umfasst;
eine über dem Kotflügel (32) angeordnete Rückleuchte (35);
eine Nummernschildleuchte (37), die ein hinter dem Kotflügel (32) angeordnetes Nummernschild (38) beleuchtet; und
eine erste Verkabelung (71), die die Nummernschildleuchte (37) mit Leistung versorgt;
wobei die Rückleuchte (35) eine Lichtquelle (51), die Licht nach hinten emittiert, einen Lampensockel (55), der ein von dem Kotflügel (32) getrenntes Bauglied ist und die Lichtquelle (51) hält und einhäust, und eine durchsichtige Abdeckung (53, 54), die ein von dem Lampensockel (55) getrenntes Bauglied ist, hinter der Lichtquelle (51) angeordnet ist und das Licht der Lichtquelle (51) transmittiert, umfasst,
wobei der Lampensockel (55) folgende Merkmale umfasst:
einen Gehäuseabschnitt (61), der nach hinten offen ist und die Lichtquelle (51) hält und einhäust,
einen Lampenfußabschnitt (62), der einstückig mit dem Gehäuseabschnitt (61) gebildet ist und an dem die Nummernschildleuchte (37) montiert ist,
einen oberen Befestigungsabschnitt (65), der ohne Zwischenschaltung des Kotflügels (32) an dem Rahmen (2) befestigt ist, und
einen unteren Befestigungsabschnitt (64), der hinter dem Kotflügel (32) angeordnet und an dem Kotflügel (32) befestigt ist, und
sich die erste Verkabelung (71) bis zu einer Position erstreckt, die höher liegt als der Kotflügel (32), während sie zwischen dem Kotflügel (32) und dem Lampenfußabschnitt (62) verläuft, ohne durch den Kotflügel (32) hindurch zu gelangen.

2. Das rittlings zu fahrende Fahrzeug (1) gemäß Anspruch 1, bei dem der Lampensockel (55) ferner einen Schildfußabschnitt (63) umfasst, der einstückig mit dem Gehäuseabschnitt (61) gebildet ist und an dem das Nummernschild (38) montiert ist.

3. Das rittlings zu fahrende Fahrzeug (1) gemäß Anspruch 1, bei dem der Lampensockel (55) ferner einen Schildfußabschnitt (63) umfasst, an dem das Nummernschild (38) montiert ist, und
bei dem der Schildfußabschnitt (63) hinter dem unteren Befestigungsabschnitt (64) angeordnet ist, um sich in einer Rückansicht des Fahrzeugs mit dem unteren Befestigungsabschnitt (64) zu überlappen.

4. Das rittlings zu fahrende Fahrzeug (1) gemäß einem der Ansprüche 1 bis 3, das ferner folgende Merkmale aufweist:
einen Sitz (16), auf dem ein Fahrer sitzt; und
bei dem der Rahmen (2) ein Paar aus einem rechten und einem linken unteren Rahmen (5), das unter dem Sitz (16) angeordnet ist, und eine hintere Querstrebe (7) umfasst, die sich über dem Hinterrad (Wr) von einem des Paares unterer Rahmen (5) zu dem anderen des Paares unterer Rahmen (5) erstreckt, und wobei die erste Verkabelung (71) durch einen Raum hinter dem hinteren Querträger (7) verläuft.

5. Das rittlings zu fahrende Fahrzeug (1) gemäß Anspruch 4, das ferner folgende Merkmale aufweist:
eine zweite Verkabelung (72), die die Rückleuchte (35) mit Leistung versorgt; und
wobei die erste Verkabelung (71) und die zweite Verkabelung (72) durch einen Raum hinter dem hinteren Querträger (7) verlaufen.

6. Das rittlings zu fahrende Fahrzeug (1) gemäß Anspruch 5, bei dem der Lampensockel (55) ferner einen oberen Halterabschnitt (66) umfasst, der die erste Verkabelung (71) in einer Position hält, die höher liegt als die Lichtquelle (51) der Rückleuchte (35), und
bei dem der obere Halterabschnitt (66) zusätzlich zu der ersten Verkabelung (71) die zweite Verkabelung (72) hält.

7. Das rittlings zu fahrende Fahrzeug (1) gemäß einem der Ansprüche 4 bis 6, bei dem der Kotflügel (32) ferner einen dazwischenliegenden Befestigungsabschnitt (43) umfasst, der an dem Rahmen (2) befestigt ist, und
bei dem der dazwischenliegende Befestigungsabschnitt (43) des Kotflügels (32) und der obere Befestigungsabschnitt (65) des Lampensockels (55) an dem hinteren Querträger (7) befestigt sind.

8. Das rittlings zu fahrende Fahrzeug (1) gemäß einem der Ansprüche 1 bis 3, das ferner folgende Merkmale aufweist:
einen Sitz (16), auf dem ein Fahrer sitzt; und
bei dem der Rahmen (2) ein Paar aus einem rechten und einem linken unteren Rahmen (5), das unter dem Sitz (16) angeordnet ist, und eine hintere Querstrebe (7) umfasst, die sich über dem Hinterrad (Wr) von einem des Paares unterer Rahmen (5) zu dem anderen des Paares unterer Rahmen (5) erstreckt, und
bei dem der Kotflügel (32) ferner einen dazwischenliegenden Befestigungsabschnitt (43) umfasst, der an dem Rahmen (2) befestigt ist, und
bei dem der dazwischenliegende Befestigungsabschnitt (43) des Kotflügels (32) und der obere Befestigungsabschnitt (65) des Lampensockels (55) an dem hinteren Querträger (7) befestigt sind.

9. Das rittlings zu fahrende Fahrzeug (1) gemäß einem der Ansprüche 1 bis 8, bei dem der Lampensockel (55) ferner einen unteren Halterabschnitt (67) umfasst, der die erste Verkabelung (71) zwischen dem Kotflügel (32) und dem Lampensockel (55) hält.

10. Das rittlings zu fahrende Fahrzeug (1) gemäß einem der Ansprüche 1 bis 4 und 8, bei dem der Lampensockel (55) ferner einen oberen Halterabschnitt (66) umfasst, der die erste Verkabelung (71) in einer Position hält, die höher liegt als die Lichtquelle (51) der Rückleuchte (35).

11. Das rittlings zu fahrende Fahrzeug (1) gemäß Anspruch 10, das ferner folgendes Merkmal aufweist:
eine zweite Verkabelung (72), die die Rückleuchte (35) mit Leistung versorgt; und
bei dem der obere Halterabschnitt (66) zusätzlich zu der ersten Verkabelung (71) die zweite Verkabelung (72) hält.

12. Das rittlings zu fahrende Fahrzeug (1) gemäß Anspruch 10 oder 11, bei dem sich der obere Halterabschnitt (66) von dem oberen Befestigungsabschnitt (65) des Lampensockels (55) aus nach oben erstreckt und
der obere Befestigungsabschnitt (65) eine obere Oberfläche umfasst, die die erste Verkabelung (71) trägt.

13. Das rittlings zu fahrende Fahrzeug (1) gemäß einem der Ansprüche 1 bis 12, bei dem der obere Befestigungsabschnitt (65) des Lampensockels (55) ein Durchgangsloch (H6a) umfasst, in das ein Bolzen (B6) eingefügt ist, der den Lampensockel (55) an dem Rahmen (2) befestigt,
wobei der untere Befestigungsabschnitt (64) des Lampensockels (55) ein Durchgangsloch (H5) umfasst, in das ein Bolzen (B5) eingefügt ist, der den Lampensockel (55) an dem Kotflügel (32) befestigt, und
bei dem das Durchdringungsloch (H6a) des oberen Befestigungsabschnitts (65) und das Durchgangsloch (H5) des unteren Befestigungsabschnitts (64) in zueinander unterschiedlichen Richtungen durch den Lampensockel (55) hindurch verlaufen.

## Revendications

1. Véhicule à enfourcher (1) comprenant:
un châssis (2);
une roue arrière (Wr) disposée sous le châssis (2), dans une vue de côté du véhicule;
un garde-boue (32) comportant une partie disposée entre le châssis (2) et la roue arrière (Wr), dans la vue de côté du véhicule, et une partie disposée derrière la roue arrière (Wr);
un feu arrière (35) disposé au-dessus du garde-boue (32);
un feu de plaque d'immatriculation (37) éclairant une plaque d'immatriculation (38) disposée derrière le garde-boue (32); et
un premier câblage (71) alimentant du courant vers le feu de plaque d'immatriculation (37);
dans lequel le feu arrière (35) comporte une source de lumière (51) émettant de la lumière vers l'arrière, un socle de lampe (55) qui est un élément séparé du garde-boue (32) et maintient et contient la source de lumière (51), et un couvercle transparent (53, 54) qui est un élément séparé du socle de lampe (55), qui est disposé derrière la source de lumière (51) et transmet la lumière de la source de lumière (51),
dans lequel le socle de lampe (55) comporte
une partie de boîtier (61) qui est ouverte vers l'arrière et maintient et contient la source de lumière (51),
une partie de pied de lampe (62) qui est solidaire de la partie de boîtier (61) et sur laquelle est montée le feu de plaque d'immatriculation (37),
une partie de fixation supérieure (65) fixée au châssis (2) sans interposition du garde-boue (32), et
une partie de fixation inférieure (64) disposée derrière le garde-boue (32) et fixée au garde-boue (32), et
le premier câblage (71) s'étend jusqu'à une position plus haute que le garde-boue (32) tout en passant entre le garde-boue (32) et la partie de pied de lampe (62) sans pénétrer à travers le garde-boue (32).

2. Véhicule à enfourcher (1) selon la revendication 1, dans lequel le socle de lampe (55) comporte par ailleurs une partie de pied de plaque (63) qui est solidaire de la partie de boîtier (61) et sur laquelle est montée la plaque d'immatriculation (38).

3. Véhicule à enfourcher (1) selon la revendication 1, dans lequel le socle de lampe (55) comporte par ailleurs une partie de pied de plaque (63) sur laquelle est montée la plaque d'immatriculation (38), et
dans lequel la partie de pied de plaque (63) est disposée derrière la partie de fixation inférieure (64) de manière à venir en recouvrement avec la partie de fixation inférieure (64), dans une vue de l'arrière du véhicule.

4. Véhicule à enfourcher (1) selon l'une quelconque des revendications 1 à 3, comprenant par ailleurs:
un siège (16) sur lequel est assis un conducteur; et
dans lequel le châssis (2) comporte une paire de châssis inférieurs droit et gauche (5) disposés sous le siège (16), et une traverse arrière (7) s'étendant, au-dessus de la roue arrière (Wr), de l'un de la paire de châssis inférieurs (5) à l'autre de la paire de châssis inférieurs (5), et
dans lequel le premier câblage (71) passe à travers un espace situé derrière la traverse arrière (7).

5. Véhicule à enfourcher (1) selon la revendication 4, comprenant par ailleurs:
un deuxième câblage (72) alimentant du courant vers le feu arrière (35); et
dans lequel le premier câblage (71) et le deuxième câblage (72) passent à travers un espace situé derrière la traverse arrière (7).

6. Véhicule à enfourcher (1) selon la revendication 5, dans lequel le socle de lampe (55) comporte par ailleurs une partie de maintien supérieure (66) maintenant le premier câblage (71) en une position plus haute que la source de lumière (51) du feu arrière (35), et
dans lequel la partie de maintien supérieure (66) maintient le deuxième câblage (72) en plus du premier câblage (71).

7. Véhicule à enfourcher (1) selon l'une quelconque des revendications 4 à 6, dans lequel le garde-boue (32) comporte par ailleurs une partie de fixation intermédiaire (43) fixée au châssis (2), et
dans lequel la partie de fixation intermédiaire (43) du garde-boue (32) et la partie de fixation supérieure (65) du socle de lampe (55) sont fixées à la traverse arrière (7).

8. Véhicule à enfourcher (1) selon l'une quelconque des revendications 1 à 3, comprenant par ailleurs:
un siège (16) sur lequel est assis un conducteur; et
dans lequel le châssis (2) comporte une paire de châssis inférieurs droit et gauche (5) disposés sous le siège (16), et une traverse arrière (7) s'étendant au-dessus de la roue arrière (Wr) de l'un de la paire de châssis inférieurs (5) à l'autre de la paire de châssis inférieurs (5),
dans lequel le garde-boue (32) comporte par ailleurs une partie de fixation intermédiaire (43) fixée au châssis (2), et
dans lequel la partie de fixation intermédiaire (43) du garde-boue (32) et la partie de fixation supérieure (65) du socle de lampe (55) sont fixées à la traverse arrière (7).

9. Véhicule à enfourcher (1) selon l'une quelconque des revendications 1 à 8, dans lequel le socle de lampe (55) comporte par ailleurs une partie de maintien inférieure (67) maintenant le premier câblage (71) entre le garde-boue (32) et le socle de lampe (55).

10. Véhicule à enfourcher (1) selon l'une quelconque des revendications 1 à 4 et 8, dans lequel le socle de lampe (55) comporte par ailleurs une partie de maintien supérieure (66) maintenant le premier câblage (71) en une position plus haute que la source de lumière (51) du feu arrière (35).

11. Véhicule à enfourcher (1) selon la revendication 10, comprenant par ailleurs:
un deuxième câblage (72), alimentant du courant vers le feu arrière (35); et
dans lequel la partie de maintien supérieure (66) maintient le deuxième câblage (72) en plus du premier câblage (71).

12. Véhicule à enfourcher (1) selon la revendication 10 ou 11, dans lequel la partie de maintien supérieure (66) s'étend vers le haut à partir de la partie de fixation supérieure (65) du socle de lampe (55), et
la partie de fixation supérieure (65) comporte une surface supérieure qui supporte le premier câblage (71).

13. Véhicule à enfourcher (1) selon l'une quelconque des revendications 1 à 12, dans lequel la partie de fixation supérieure (65) du socle de lampe (55) comporte un trou pénétrant (H6a) dans lequel est inséré un boulon (B6) qui fixe le socle de lampe (55) au châssis (2),
dans lequel la partie de fixation inférieure (64) du socle de lampe (55) comporte un trou pénétrant (H5) dans lequel est inséré un boulon (B5) qui fixe le socle de lampe (55) au garde-boue (32), et
dans lequel le trou pénétrant (H6a) de la partie de fixation supérieure (65) et le trou pénétrant (H5) de la partie de fixation inférieure (64) pénètrent à travers le socle de lampe (55) dans des directions différentes l'une de l'autre.
